# EUROPÄISCHE PATENTANMELDUNG

(11) **EP 4 257 003 A1**
(43) Veröffentlichungstag der Anmeldung: **11.10.2023**
(21) Anmeldenummer: 23000061.4
(22) Anmeldetag: 07.04.2023
(51) Int. Cl.: A43D 1/02, A43B 7/24, A43B 17/00, B33Y 10/00, B33Y 50/00, B33Y 80/00

(54) **VERFAHREN ZUR HERSTELLUNG VON ANATOMISCH ANGEPASSTEN SOHLEN ODER EINLEGESOHLEN**

(30) Priorität: 07.04.2022 AT 600512022
(71) Anmelder: Probst, Leo, 7053 Hornstein (AT)
(72) Erfinder: Probst, Leo, 7053 Hornstein (AT)

(57) **Zusammenfassung**

Diese Erfindung beschreibt ein Verfahren, mit welchem direkt im Schuhfachhandel ein orthopädisch angepasster Schuh individuell für den Kunden gefertigt werden kann. Dabei wird zuerst eine orthopädisch korrigierende Fußbettoberflache digitalisiert. Als nächstes wird die digitalisierte Fußbettoberfläche mit den Konturen des gewünschten Schuhmodells vereint, vollautomatisch in Maschinenbahnen umgerechnet und zu einem Fertigungsmodul weitergeleitet, so dass ein fertiger Schuh oder eine fertige Einlegesohle additiv oder zerspanend gefertigt werden kann. Nach relativ kurzer Zeit erhalt man so seine individuellen, orthopädisch angepassten Schuhe.

## Beschreibung

Diese Erfindung bezieht sich auf ein Verfahren zur gewerblichen Herstellung von individuell angepassten Schuhen, Schuhsohlen und Schuheinlagen mit orthopädisch korrigierter Sohle, ausgehend von einer medizinischen Indikation,

Die Form des menschlichen Fußes ist eine wichtige Voraussetzung für den aufrechten Gang. Die meisten Menschen haben grundsätzlich leicht verformte Füße. Dies ist voll kommen normal und verursacht in der Regel keine Probleme. Unsere zunehmend bewegungsärmere Lebensweise reduziert jedoch die Ausbildung eines stabilen Fußgewölbes, was zu einer Abflachung der Wölbung der Fußsohle führt und ein Senk- bzw. Plattfuß entstehen kann. Fehlstellungen im Bewegungsapparat sind die weitere Folge und Überlastungsschmerzen in den Füßen, Knien und im Rücken quasi vorprogrammiert.

Um Fußfehlstellungen entgegenzutreten, wurden von Orthopäden unterschiedliche Möglichkeiten entwickelt, den Betroffenen zu helfen. Zum einen sind dies vom Orthopäden verordnete und vom Orthopädieschuhmacher speziell angefertigte Schuhe mit eingearbeiteter orthopädisch korrigierender Sohle. Diese sind zwar eine gute medizinische Lösung, zumeist aber sehr teuer und vor allem optisch wenig ansprechend. Solche Schuhe werden vorwiegend von Personen mit Fußfehlstellungen bzw. speziellen Bedürfnissen getragen, sind aber für die generelle Anwendung zur Korrektur von Senk- bzw. Spreizfüßen nicht vorgesehen und kommen daher für die breite Masse nicht zur Anwendung.

Als eine weitere Möglichkeit werden passiv stützende Elemente, wie starre Schuheinlagen, verordnet, die zwar die Muskelschwäche nicht beheben können, aber den abgesenkten Fuß so weit passiv korrigieren, dass zumindest kein weiterer Schaden entsteht.

Circa 19% aller Menschen im deutschsprachigen Raum tragen solche ärztlich verschriebenen orthopädischen Schuheinlagen. Diese losen Sohlen verfügen aus medizinischer Sicht über eine recht kurze Lebensdauer und können außerdem nur in Straßenschuhen mit herausnehmbaren Sohlen getragen werden. Letzteres hat den Nachteil, dass diese Einlegesohlen im Schuh verrutschen können, was anstelle einer Korrektur der Haltung zu deren Verschlechterung beiträgt. Außerdem ist es praktisch unmöglich Einlegesohlen dieser Bauart in den Schuhen zu tragen, in denen man vermutlich die meiste Zeit des Tages verbringt: in offenen Hausschuhen.

Aus der DE 102013002012 A1 ist ein Verfahren zur Herstellung von individuellen Sohlen mittels Spritzgussmaschinen bekannt. Der Nachteil an diesem Verfahren ist der hohe Arbeitsaufwand, die geringe Nachhaltigkeit und der dadurch resultierende hohe Preis für den Endverbraucher.

US 11026482 B1 beschreibt einen Prozess zur Herstellung von individuell angepassten, 3D-gedruckten Sohlen. Dabei beschränkt sich die Individualität jedoch lediglich auf die Länge und die Breite des Fußes, welche der Kunde selbstständig ausmessen muss. Also hat die dabei hergestellte Sohle keine orthopädisch korrigierende Wirkung.

Verfahren zur Herstellung von Orthesenmodellen anhand von digitalisierten Körperteilen sind bereits bekannt und auch in Patenten wie US 10842220 A1 beschrieben. Diese beziehen sich jedoch auf die individuelle Fertigung von Prothesen und haben für den normalen Kunden von orthopädischen Schuhen und Einlagen keinen Nutzen.

Aus der EP 3704989 A1 ist ein Verfahren bekannt, in dem aus Bildern eines Fußes Außenformdaten des Fußes und Informationen über die Knochen im Fuß gewonnen werden. Weiters wird dann mittels eines Modelldatengenerators, basierend auf den zuvor ermittelten Fußinformationen Modelldaten erzeugt, die für eine Formgebungsvorrichtung zu verwenden sind, um eine Einlegesohle zu formen. Der Nachteil dieses Verfahrens ist, dass keine realitätsnahen Aussagen über Belastungen und Druckstellen, die wahrend des Gehens an der Fußsohle auftreten, miteinbezogen werden. Also finden solche, mit diesem Verfahren hergestellte, Sohlen aus medizinischer und anwenderbezogener Sicht kaum Akzeptanz.

Aus der WO 2015/169942 A1 ist ein Verfahren bekannt, in dem Fußsohlen von Patienten direkt durch Fußdruckdaten, Gangdaten, Körperdaten oder Bilddaten digitalisiert werden. Anhand der digitalisierten Patientendaten werden statistisch begründete, korrigierende Maßnahmen vorgenommen und anhand der daraus gewonnenen Erkenntnisse ein Sohlenteil additiv gefertigt.

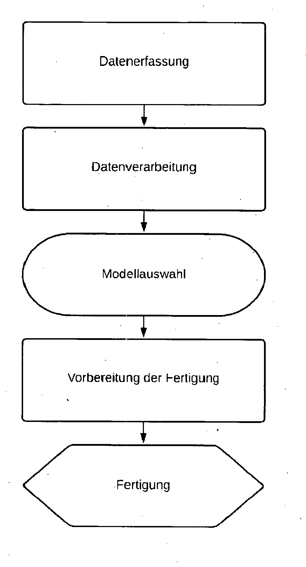

Aus der WO 2017/222944 A1 ist ein Verfahren bekannt, in dem Fußsohlen durch digitale, optische Bildgebung oder Ultraschallbildgebung gescannt werden. Anhand des Scans wird aus bestehenden, digitalen Fußbetten ein ähnliches ausgesucht, welches dem Patienten aufgrund der genommenen Abmaße am ehesten passt. Aus dem Scan werden Stellen auf der ausgewählten Sohle ausgemacht, an denen Material aufgetragen werden muss, um eine orthopädisch korrigierende Wirkung zu erzielen. Das in diesem Patent beschriebene Verfahren zur Herstellung eines individuell angepassten Schuhs mit orthopädisch korrigierender Sohle ist, wie in der einzigen Figur gezeigt, unterteilt in:
- Datenerfassung
   Im ersten Schritt wird die orthopädisch korrigierende Form einer Sohlenoberfläche digital erfasst. Dies kann auf verschiedenste Arten erfolgen. Zum Beispiel durch das Abtasten einer vorhandenen, vom Orthopädietechniker für den Kunden individuell angefertigten Einlegesohle mittels optischer Sensorik (Bilderfassung, Laserscanner, etc.).
- Datenverarbeitung
   Im zweiten Schritt wird die digital erfasste Form an eine Datenbank (z.B. im Internet) weitergeleitet. Dort werden die Daten des Fußbetts für die weiteren Arbeitsschritte digital aufbereitet und bis auf Weiteres als Grundtopologie für eine spätere Weiterverarbeitung abgespeichert
- Modellauswahl
   In diesem Schritt wird es dem Kunden ermöglicht, sich für ein gewünschtes Paar Schuhe, Pantoletten, Einlegesohlen, usw. zu entscheiden (zum Beispiel auf einem Onlineportal oder einer Website).
- Vorbereiten der Fertigung
   Nach Auswahl des Modells wird die digitalisierte Form des Fußbetts mit dem vom Kunden gewählten Modell softwaremäßig, mittels spezieller Algorithmen vereint und für den Fertigungsprozess vorbereitet. Dies ist und kann niemals ein Standardprozess sein, da je nach Modellwahl die Grundform variiert und die zuvor aufgenommene ideale Fußbettform an die Gegebenheiten des Modells angepasst werden müssen, ohne jedoch die orthopädischen Funktionen zu verlieren bzw. zu verändern.
- Fertigung
   Im letzten Schritt wird die orthopädisch korrigierende Oberfläche in einem Fertigungsmodul mittels additiver (z.B. 3D Drucken) oder zerspanender Fertigung (z.B. Fräsen mittels einer CNC Maschine) in das vom Kunden gewählte Schuhmodel übertragen. Als Grundlage werden hierfür die, aus dem vorherigen Schritt, generierten Daten zur computergestützten Fertigung mittels automatisierter Werkzeugmaschinen genutzt.

Bei dem Verfahren werden bereits bekannte Fertigungsmaschinen, wie zum Beispiel CNC-Maschinen oder 3D-Drucker, verwendet.

## Patentansprüche

1. Verfahren zum Herstellen von individuell angepassten, orthopädisch korrigierenden Schuhsohlen oder Einlegesohlen welches **dadurch gekennzeichnet ist, dass**
a. ein digitaler Datensatz, der orthopädisch korrigierenden Form einer Sohlenoberfläche, welcher die Geometrie der orthopädischen Oberfläche einer Fußsohle beschreibt, erstellt wird,
b. die digitalen Daten als Grundlage zur Erstellung eines digitalen 3D-Modells, der herzustellenden Schuhsohle oder der Einlegesohle dienen,
c. dieses 3D-Modell als Vorlage zur Erstellung eines Maschinen-Datensatzes dient und
d. für die additive oder zerspanende Fertigung der gesamten Schuhsohle, der Einlegesohle oder der Bearbeitung deren Rohlinge verwendet wird.

2. Verfahren zum Herstellen von individuell angepassten, orthopädisch korrigierenden Schuhsohlen nach Anspruch 1, **dadurch gekennzeichnet, dass** die aus der Digitalisierung gewonnenen Daten mit dem 3D-Modell der Schuhsohlenform des gewählten Schuhfabrikats vereint werden, um ein digitales 3D-Modell der zu fertigenden Schuhsohle zu erstellen.

3. Verfahren zum Herstellen von individuell angepassten, orthopädisch korrigierenden Einlegesohlen nach Anspruch 1, **dadurch gekennzeichnet, dass** die aus der Digitalisierung gewonnenen Daten mit dem 3D-Modell der Einlegesohlenform des gewählten Einlagenfabrikats vereint werden, um ein digitales 3D-Modell der zu fertigenden Einlegesohle zu erstellen.

4. Verfahren zum Herstellen von individuell angepassten, orthopädisch korrigierenden Schuhsohlen nach Anspruch 2, **dadurch gekennzeichnet, dass** eine Schuhsohle mit orthopädisch korrigierender Form, mittels additiver Fertigung oder mittels zerspanender Fertigung anhand des Maschinen-Datensatzes gefertigt wird.

5. Verfahren zum Herstellen von individuell angepassten, orthopädisch korrigierenden Einlegesohlen nach Anspruch 3, **dadurch gekennzeichnet, dass** eine Einlegesohle mit orthopädisch korrigierender Form, mittels additiver Fertigung oder mittels zerspanender Fertigung anhand des Maschinen-Datensatzes gefertigt wird.

6. Verfahren zum Herstellen von individuell angepassten, orthopädisch korrigierenden Schuhsohlen oder Einlegesohlen nach Anspruch 1, **dadurch gekennzeichnet, dass** die Übertragung der Geometrie, der orthopädisch korrigierenden Oberfläche einer Fußsohle, auf bereits gefertigte Rohlinge von Schuhsohlen oder Einlegesohlen erfolgt.

7. Orthopädisch korrigierenden Schuhsohlen oder Einlegesohlen **dadurch gekennzeichnet, dass** sie nach einem oder mehreren Verfahrensschritten der Ansprüche 1-6 erzeugt werden.
